# EUROPEAN PATENT APPLICATION

(11) **EP 2 106 129 A2**
(43) Date of publication of application: **30.09.2009**
(21) Application number: 09003970.2
(22) Date of filing: 19.03.2009
(51) Int. Cl.: H04N 5/232

(54) **Compound eye photographing apparatus, control method therefor, and program**

(30) Priority: 26.03.2008 JP 2008079636
(71) Applicant: FUJIFILM Corporation, Minato-ku Tokyo (JP)
(72) Inventor: Masuda, Tomonori, Kurokawa-gun Miyagi (JP)
(74) Representative: Grünecker, Kinkeldey, Stockmair & Schwanhäusser Anwaltssozietät

(57) **Abstract**

Enabling easy determination as to whether or not a predetermined common subject, such as a face, is included in a plurality of images obtained by a compound eye photographing apparatus. A plurality of images of a subject is obtained by photographing the subject at a plurality of photographing positions with cameras (2A, 2B). The predetermined subject is detected by subject detection unit (7) from the plurality of images obtained by cameras (2A, 2B). Then a determination is made by determination unit (8) as to whether or not the predetermined subject detected from the plurality of images corresponds to each other by matching the areas including the detected predetermined subject between the plurality of images and the determination result is outputted.

## Description

### BACKGROUND OF THE INVENTION

### Field of the Invention

The present invention relates to a compound eye photographing apparatus for photographing a subject at a plurality of different photographing positions from each other and a control method therefor. The invention also relates to a program for causing a computer to perform the control method for the compound eye photographing apparatus.

### Description of the Related Art

A method for generating a distance image that represents a stereoscopic shape of a subject is proposed. In the method, the subject is photographed by a compound eye camera having a plurality of cameras, then corresponding points, which are pixels corresponding to each other, between a plurality of images (a base image obtained by a base camera and a reference image obtained by a reference camera) obtained by the photographing are searched for (stereo matching), and the distance from the base camera or reference camera to the point on the subject corresponding to the pixel is measured by applying the principle of triangulation to the positional difference (parallax) between the pixel in the base image and the pixel in the reference image corresponding to each other, thereby generating a distance image.

In the mean time, for a compound eye camera, various types of controls, such as focus control, exposure control, photographing control are performed, as well as the distance measurement described above, based on the result of determination if a target subject is included in a plurality of images obtained by the compound eye camera. In order to perform such controls for a compound eye camera, various methods for determining if a target subject, such as a face or the like, is included in a plurality of images obtained by the compound eye camera are proposed. For example, U.S. Patent No. 6,999,896 (Patent Document 1) describes one of such methods. In the method, a plurality of sensors, namely a compound camera and a millimeter wave radar, is provided, then based on normal error distributions with respect the position and velocity when the same target object is detected by each of the sensors, first and second probabilities that each of the detected objects is the same target object in terms of the position and velocity are calculate from the errors in the identified positions and velocities, and a third probability is calculated based on the first and second probabilities to determine that each of the detected objects is the same target object when the third probability exceeds a predetermined threshold value.

Further, Japanese Unexamined Patent Publication No. 2007-110498 (Patent Document 2) proposes a control method of a compound eye camera in which detection of a specific subject, such as a face or the like, and various controls, including focus control, exposure control, and the like, are performed based on an image obtained by one of a plurality of cameras thereof.

The method described in Patent Document 1, however, requires a sensor other than a compound eye camera which complicates the device configuration. Further, it is necessary to calculate the probabilities which requires a longed time. In the method described in Patent Document 2, various controls are performed based on an image obtained by one camera, thus the controls are performed even when a subject commonly presents in the photographing ranges of all of the cameras is not included in the image. Here, it is often the case that a subject presents in the photographing range of one camera but not in the photographing range of another camera is not so important for the photographer. Consequently, in the method described in Patent Document 2, various controls may sometimes be performed based on a minor subj ect included only in the image obtained by one camera.

The present invention has been developed in view of the circumstances described above, and it is an object of the present invention to enable simple determination as to whether or not a predetermined common subject, such as a face or the like, is included in a plurality of images obtained by a compound eye photographing apparatus.

### SUMMARY OF THE INVENTION

A first compound eye photographing apparatus according to the present invention is an apparatus including:
a plurality of photographing units for photographing a subj ect at a plurality of photographing positions to obtain a plurality of images of the subject;
a subj ect detection unit for detecting a predetermined subj ect from the plurality of images; and
a determination unit for determining whether or not the predetermined subject detected from the plurality of images corresponds to each other by matching areas including the detected predetermined subject between the plurality of images and outputting the determination result.

A second compound eye photographing apparatus according to the present invention is an apparatus including:
a plurality of photographing units for photographing a subj ect at a plurality of photographing positions to obtain a plurality of images of the subject;
a subj ect detection unit for detecting a predetermined subj ect from a first image of the plurality of images; and
a determination unit for determining whether or not the predetermined subject detected from the first image is included in a second image by matching an area including the predetermined subject detected from the first image with the second image and outputting the determination result.

A first compound eye photographing apparatus control method according to the present invention is a method including the steps of:
photographing a subject at a plurality of photographing positions to obtain a plurality of images of the subject;
detecting a predetermined subject from the plurality of images; and
determining whether or not the predetermined subject detected from the plurality of images corresponds to each other by matching areas including the detected predetermined subject between the plurality of images and outputting the determination result.

A second compound eye photographing apparatus control method according to the present invention is a method including the steps of:
photographing a subject at a plurality of photographing positions to obtain a plurality of images of the subject;
detecting a predetermined subject from a first image of the plurality of images; and
determining whether or not the predetermined subject detected from the first image is included in a second image by matching an area including the predetermined subject detected from the first image with the second image and outputting the determination result.

The first and second compound eye photographing apparatus control methods according the present invention may be provided as programs for causing a computer to perform the methods.

According to the first compound eye photographing apparatus and control method therefor of the present invention, a subject is photographed at a plurality of photographing positions to obtain a plurality of images of the subject, then a predetermined subject is detected from the plurality of images, and a determination is made as to whether or not the predetermined subject detected from the plurality of images corresponds to each other by matching areas including the detected predetermined subject between the plurality of images and the determination result is outputted. This allows a determination as to whether or not a predetermined subject common to a plurality of images is present without performing complicated calculations as in the method described in Patent Document 1. Further, based on the determination result, various controls may be performed using the predetermined subject common to the plurality of images regarded as important by the photographer.

According to the second compound eye photographing apparatus and control method therefor of the present invention, a subject is photographed at a plurality of photographing positions to obtain a plurality of images of the subject, then a predetermined subject is detected from a first image of the plurality of images, and a determination is made as to whether or not the predetermined subject detected from the first image is included in a second image by matching an area including the predetermined subject detected from the first image with the second image and the determination result is outputted. This allows a determination as to whether or not a predetermined subject common to a plurality of images is present without performing complicated calculations as in the method described in Patent Document 1. Further, based on the determination result, various controls may be performed using the predetermined subject common to the plurality of images regarded as important by the photographer.

### BRIEF DESCRIPTION OF THE DRAWINGS

Figure 1 is a schematic block diagram of a compound eye photographing apparatus according to a first embodiment of the present invention, illustrating a configuration thereof.
Figure 2 illustrates face areas detected from images SA, SB in the first embodiment.
Figure 3 is a flowchart illustrating processing performed in the first embodiment.
Figure 4 illustrates face areas detected from image SA in a second embodiment.
Figure 5 is a flowchart illustrating processing performed in the second embodiment.

### DESCRIPTION OF THE PREFERRED EMBODIMENTS

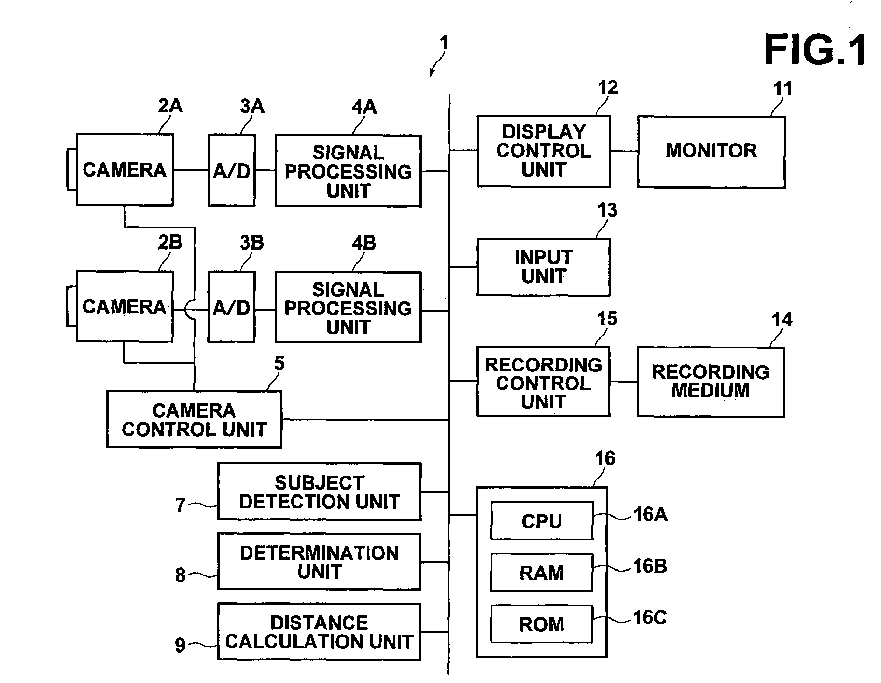

Hereinafter, exemplary embodiments of the present invention will be described with reference to the accompanying drawings. Figure 1 is a schematic block diagram of a compound eye photographing apparatus according to a first embodiment of the present invention, illustrating a configuration thereof. As illustrated in Figure 1, compound eye photographing apparatus 1 according to the first embodiment of the present invention includes two cameras 2A, 2B, A/D conversion units 3A, 3B, signal processing units 4A, 4B, and camera control unit 5.

Each of cameras 2A, 2B is provided to obtain an image for calculating a distance value. It has an optical system including a taking lens and an imaging device, such as a CCD or the like, and drive-controlled by camera control unit 5 in focus operation and zoom operation using the taking lens, exposure, charge readout timing from the imaging device, and the like. Cameras 2A, 2B are disposed at a predetermined distance, and a baseline length, which is the distance between cameras 2A, 2B, and an angle of convergence, which is an angle formed by the lines of sight of both cameras when focusing on a subject, can be changed. In the present embodiment, the description will be made on the assumption that cameras 2A, 2B photograph motion pictures, but the cameras may be those that photograph through images until a photographing operation is performed and when the photographing operation is performed, photograph still images at that timing. Where motion pictures are photographed, images SA, SB correspond to one frame of the respective motion pictures.

A/D conversion units 3A, 3B convert images SA, SB obtained by respective cameras 2A, 2B by photographing from analog data to digital data.

Signal processing units 4A, 4B perform parallelizing processing for parallelizing two images SA, SB, as well as performing correction processing for correcting variations in the sensitivity distributions of image data and distortions of the optical systems. The signal processing units 4A, 4B further perform image processing on the parallelized images, such as white balance adjustment, tone correction, sharpness correction, color correction, and the like. Note that reference symbols SA, SB used for images prior to the processing by signal processing units 4A, 4B will also be used for the processed images. Further, the correction processing, parallelizing processing, and image processing are hereinafter collectively referred to as signal processing.

The compound eye photographing apparatus 1 further includes subject detection unit 7, determination unit 8, and distance calculation unit 9.

Subject detection unit 7 detects an area that includes a predetermined subject from images SA, SB (whether before or after the signal processing) obtained by cameras 2A, 2B respectively by photographing. In the present embodiment, a face is used as the predetermined subject, and subject detection unit 7 detects a face area which includes a face from images SA, SB. As for the method for detecting a face from an image, any method may be used, such as template matching method, method using a face discriminator obtained through machine learning using multitudes of sample images, method that extracts a rectangular area having a skin color and enclosing a face contour shape in an image as a face area, method that extracts an area having a face contour shape as a face area, or the like. Where motion pictures are photographed, images SA, SB correspond to one frame of the respective motion pictures. As such, the face area detection and the subsequent processing may be performed on all of the frames or by skipping some of them.

Determination unit 8 determines if face areas detected from images SA, SB correspond to each other by matching them, and outputs the determination result to distance calculation unit 9.

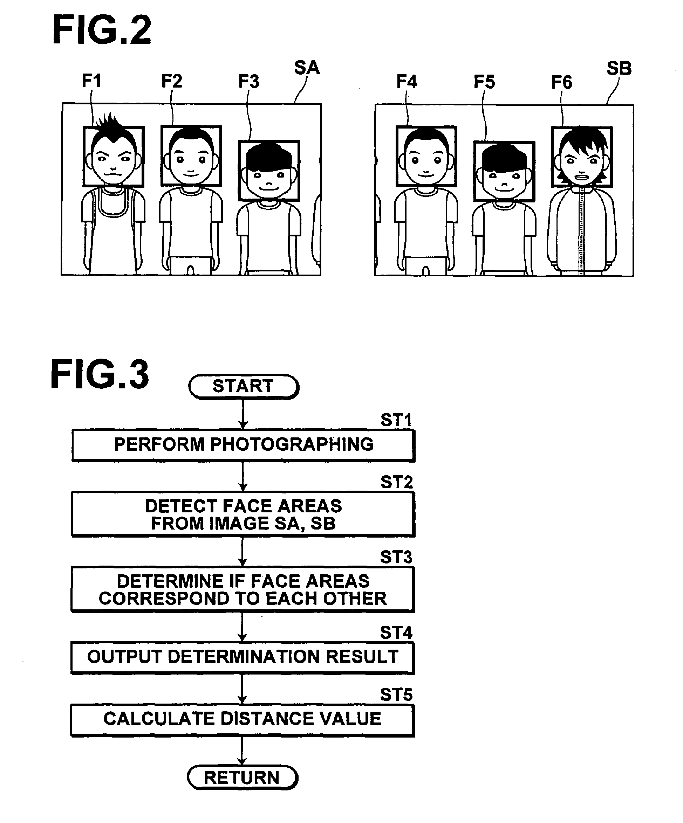

Figure 2 illustrates face areas detected from images SA, SB in the first embodiment. It is assumed that three face areas F1 to F3 are detected from image SA, and three face areas F4 to F6 are detected from image SB, as illustrated in Figure 2. Determination unit 8 matches face areas F1 to F3 detected from image SA with face areas F4 to F6 detected from image SB to determine if the faces correspond to each other. More specifically, determination unit 8 normalizes the sizes of face areas F1 to F3 and face areas F4 to F6, calculates a correlation between the normalized face areas, and determines if the face areas correspond to each other according to whether or not the correlation exceeds a threshold value. As for the correlation, the sum of absolute differences, the reciprocal value of the sum of squared differences, or the like in values of corresponding pixels between the face areas may be used.

Here, in the case of images SA, SB shown in Figure 2, determination unit 8 determines that face areas F2 and F4, and face areas F3 and F5 correspond to each other, while determining that face areas F1 and F6 do not have corresponding faces, and outputs the determination result to distance calculation unit 9.

Distance calculation unit 9 is provided to measure the distance from each of cameras 2A, 2B to a common subject included in the photographing ranges of cameras 2A, 2B. First, the unit obtains corresponding points corresponding to each other between corresponding face areas in images SA, SB obtained by cameras 2A, 2B using a stereo matching method. For example, distance calculation unit 9 obtains the corresponding points by cutting out a partial matrix (e.g., 3x3 pixels) from the corresponding face areas and calculating a correlation value thereof. Then, using the obtained corresponding points, baseline length, convergence angle and zoom magnification of cameras 2A, 2B, the unit calculates a distance value representing the distance to a face commonly included in images SA, SB based on the principle of triangulation. More specifically, with respect to all of the pixels in the common face area in images SA, SB, corresponding points between the corresponding face areas are detected on a pixel-by-pixel basis to calculate a parallax, which is the difference between the corresponding points, then the distance value is calculated based on the parallax. A distance image in which each pixel has a distance value may be generated based on the distance value. Further, a stereoscopically viewable stereoscopic image may also be generated from images SA, SB based on the parallax.

Compound eye photographing apparatus 1 further includes monitor 11, such as a liquid crystal display, for displaying images SA, SB, and various types of information; display control unit 12 for controlling display of various types of information on monitor 11; input unit 13 which includes an arrow key, operation buttons, a zoom lever, a release button, and the like; and recording control unit 15 for recording images SA, SB and distance values on recording medium 14, such as a memory card or the like. Still further, compound eye photographing apparatus 1 includes overall control unit 16 which includes CPU 16A, RAM 16B which serves as a work area, and ROM 16C having stored therein operation programs and various setting values used in apparatus 1.

Processing performed in the first embodiment will now be described. Figure 3 is a flowchart illustrating the processing performed in the first embodiment. In the first embodiment, a human face is the target subject, and it is assumed that images SA, SB obtained by cameras 2A, 2B include a face.

Overall control unit 16 initiates the processing when a photographing instruction is given, and camera control unit 5 causes cameras 2A, 2B to obtain images SA, SB by photographing the subject (step ST1). Then, subject detection unit 7 detects face areas from images SA, SB obtained by cameras 2A, 2B by the photographing (step ST2).

Then, determination unit 8 determines whether or not the face area detected from image SA corresponds to the face area detected from image SB by matching them (step ST3), and outputs the determination result to distance calculation unit 9 (step ST4).

Based on the determination result of determination unit 8, distance calculation unit 9 calculates a distance value with respect to a common face area between images SA, SB (step ST5), and the processing returns to step ST1.

As described above, in the first embodiment, a determination is made as to whether or not a face area detected from image SA corresponds to a face area detected from image SB by matching them, whereby a determination may be made whether or not a face common to images SA, SB is present without performing complicated calculations. Further, based on the determination result, the distance value to the face common to images SA, SB which is regarded as important by the photographer may be calculated.

Further, in the first embodiment, compound eye photographing apparatus 1 includes two cameras 2A, 2B, but the apparatus may include three or more cameras. In this case, a face area is detected from the image obtained by each of the cameras, and the face area detected from each image is matched to determine whether or not the face area detected from each image corresponds to each other.

Next, a second embodiment of the present invention will be described. The configuration of the compound eye photographing apparatus according to the second embodiment is identical to that of the compound eye photographing apparatus 1 according to the first embodiment, and only differs in processing performed thereby, so that the configuration will not be elaborated upon further here.

The second embodiment differs from the first embodiment in that a face area is detected from only image SA out of images SA, SB obtained by cameras 2A, 2B respectively, then the detected face is tentatively stored in RAM16B, and a determination is made as to whether or not the face area detected from image SA is included in image SB by matching the detected face area with image SB.

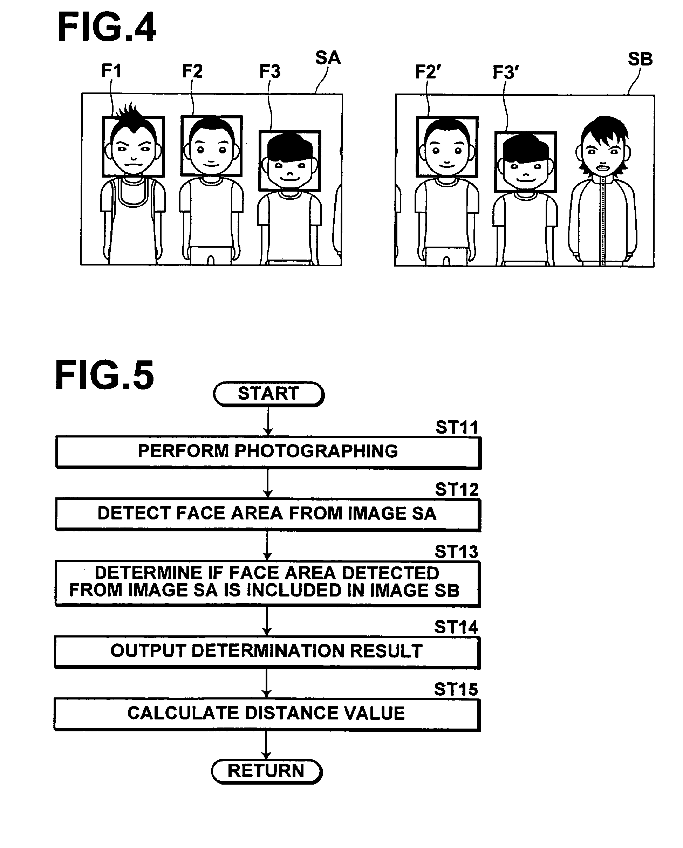

Figure 4 illustrates face areas detected from image SA in the second embodiment. It is assumed that three face areas F1 to F3 are detected from image SA as illustrated in Figure 4, subject detection unit 7 tentatively stores face areas F1 to F3 in RAM16B. Then, determination unit 8 matches each of face areas F1 to F3 detected from image SA with image SB to determine whether or not an area corresponding to one of face areas F1 to F3 is found in image SB. More specifically, while moving each of face areas F1 to F3 on image SB, a correlation between each of face areas F1 to F3 and image SB is calculated and, if an area having a correlation greater than a threshold value is present on image SB, the face area detected from image SA is determined to be included in image SB.

In the case of images SA, SB shown in Figure 4, faces corresponding to the faces of face areas F2, F3 are present in image SB, thus determination unit 8 determines that faces corresponding to the faces of face areas F2, F3 are included in image SB. In the second embodiment, determination unit 8 detects the areas corresponding to face areas F2, F3 on image SB as face areas F2', F3' , and outputs the determination result including information of face areas F2', F3' (positions and sizes) to distance calculation unit 9.

Processing performed in the second embodiment will now be described. Figure 5 is a flowchart illustrating the processing performed in the second embodiment. In the second embodiment, a human face is assumed to be the subject, and images SA, SB obtained by cameras 2A, 2B are assumed to include a face.

Overall control unit 16 initiates the processing when a photographing instruction is given, and camera control unit 5 causes cameras 2A, 2B to obtain images SA, SB by photographing the subject (step ST11) . Then subject detection unit 7 detects a face area from image SA obtained by camera 2A by the photographing (step ST12).

Then, determination unit 8 determines whether or not the face area detected from image SA is included in image SB by matching the face area detected from image SA with image SB (step ST13), and outputs the determination result to distance calculation unit 9 (step ST14).

Based on the determination result of determination unit 8, distance calculation unit 9 calculates a distance value with respect to a common face area between images SA, SB (step ST15), and the processing returns to step ST11.

As described above, in the second embodiment, a determination is made as to whether or not a face area detected from image SA is included in image SB by matching the face area detected from image SA with image SB, whereby a determination may be made whether or not a face common to images SA, SB is present without performing complicated calculations. Further, based on the determination result, the distance value to the face common to images SA, SB which is regarded as important by the photographer may be calculated.

Further, in the second embodiment, compound eye photographing apparatus 1 includes two cameras 2A, 2B, but the apparatus may include three or more cameras. In this case, a face area is detected from the image obtained by one of the cameras, and the detected face area is matched with the other images to determine whether or not the detected face area is included in the other images.

In the first and second embodiments, the determination result is outputted to distance calculation unit 9 to calculate the distance value to the face common to images SA, SB. But an arrangement may be adopted in which the determination result is outputted to camera control unit 5, thereby controlling the focuses of cameras 2A, 2B so as to come into focus on the common subject. Further, exposure of cameras 2A, 2B may be controlled such that the exposure of the common subject becomes identical. Still further, particularly in still image photographing, when a common face area appears in still images obtained by cameras 2A, 2B, photographing may be performed by cameras 2A, 2B. In this case, expression of the face area may be detected and when the face included in the face area has a specific expression, such as smiling or the like, photographing may be performed by cameras 2A, 2B.

In the flowcharts of the first and second embodiments, the description has been made on the assumption that a face is included in images SA, SB. But there may be a case in which a face is not included in images SA, SB. In such a case, a determination may be made whether or not a face is included in images SA, SB, and if not, the processing may be returned to the photographing step.

In the first and second embodiments, a predetermined subject is a face, but it will be appreciated that a subject other than a face, such as a vehicle, building, or the like, can be the detection target.

So far embodiments of the present invention have been described, but a program for causing a computer to function as units corresponding to subject detection units 7 and determination unit 8, and to perform processing like that shown in Figure 2 or 5 is another embodiment of the present invention. Further, a computer readable recording medium on which is recorded such a program is still another embodiment of the present invention.

## Claims

1. A compound eye photographing apparatus which includes a pluralityofphotographingunits (2A, 2B) forphotographingasubject at a plurality of photographing positions to obtain a plurality of images of the subject, the apparatus comprising:
a subject detection unit (7) for detecting a predetermined subject from the plurality of images; and
a determination unit (8) for determining whether or not the predetermined subject detected from the plurality of images corresponds to each other by matching areas including the detected predetermined subject between the plurality of images and outputting the determination result.

2. A compound eye photographing apparatus which includes a plurality of photographing units (2A, 2B) for photographing a subject at a plurality of photographing positions to obtain a plurality of images of the subject, the apparatus comprising:
a subject detection unit (7) for detecting a predetermined subject from a first image of the plurality of images; and
a determination unit (8) for determining whether or not the predetermined subject detected from the first image is included in a second image by matching an area including the predetermined subject detected from the first image with the second image and outputting the determination result.

3. A control method for a compound eye photographing apparatus which includes a plurality of photographing units (2A, 2B) for photographing a subject at a plurality of photographing positions to obtain a plurality of images of the subject, the method comprising the steps of:
detecting a predetermined subject from the plurality of images; and
determining whether or not the predetermined subject detected from the plurality of images corresponds to each other by matching areas including the detected predetermined subject between the plurality of images and outputting the determination result.

4. A control method for a compound eye photographing apparatus which includes a plurality of photographing units (2A, 2B) for photographing a subject at a plurality of photographing positions to obtain a plurality of images of the subject, the method comprising the steps of:
detecting a predetermined subject from a first image of the plurality of images; and
determining whether or not the predetermined subject detected from the first image is included in a second image by matching an area including the predetermined subject detected from the first image with the second image and outputting the determination result.

5. A program for causing a computer to perform a control method for a compound eye photographing apparatus which includes a plurality of photographing units (2A, 2B) for photographing a subject at a plurality of photographing positions to obtain a plurality of images of the subject, the method comprising the steps of:
detecting a predetermined subject from the plurality of images; and
determining whether or not the predetermined subject detected from the plurality of images corresponds to each other by matching areas including the detected predetermined subject between the plurality of images and outputting the determination result.

6. A program for causing a computer to perform a control method for a compound eye photographing apparatus which includes a plurality of photographing units (2A, 2B) for photographing a subject at a plurality of photographing positions to obtain a plurality of images of the subject, the method comprising the steps of:
detecting a predetermined subject from a first image of the plurality of images; and
determining whether or not the predetermined subject detected from the first image is included in a second image by matching an area including the predetermined subject detected from the first image with the second image and outputting the determination result.
